# EUROPEAN PATENT APPLICATION

(11) **EP 4 431 980 A1**
(43) Date of publication of application: **18.09.2024**
(21) Application number: 23275044.8
(22) Date of filing: 16.03.2023
(51) Int. Cl.: G01S 7/495, G01S 7/02, G01S 7/48, G01S 3/78, F41H 13/00

(54) **METHOD AND APPARATUS FOR CHARACTERIZING AN INCOMING ELECTROMAGNETIC ENERGY BEAM**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A method and apparatus for characterising an incoming electromagnetic energy beam. The method comprises the steps of generating a beam of laser pulses (3), generating a beam of plasma filaments from the laser pulses (5), directing the plasma filaments so that they intersect with the incoming electromagnetic energy beam, thereby generating a diffuse electromagnetic energy beam (7), and detecting a first portion of the diffuse electromagnetic energy beam using a first detector (9).

## Description

### FIELD

This disclosure relates to a method and apparatus for characterising an incoming electromagnetic energy beam.

### BACKGROUND

Electromagnetic energy beams, for example, high energy laser beams, may be directed towards targets, and may be used as probes to seek information about the target. It is desirable to be able to characterise incoming energy beams to determine the likely beam source and/or origin.

### SUMMARY

A first aspect of the present disclosure provides a method of characterising an incoming electromagnetic energy beam having the steps set out in claim 1 below.

A second aspect of the invention provides an apparatus for characterising an incoming electromagnetic energy beam, having the features set out in claim 12 below.

A third aspect of the disclosure provides a platform including an apparatus according to the second aspect of the disclosure.

It is will of course be appreciated that features described in relation to one aspect of the present disclosure may be incorporated into any other aspects of the present disclosure. For example, the apparatus may incorporate any of the features describes with reference to the method and vice versa.

### BRIEF DESCRIPTION OF THE DRAWINGS

Example embodiments of the present disclosure will now be described, by way of example only, with reference to the accompanying drawings, of which:
FIG. 1 is a flow chart showing a method according to an example embodiment of the present disclosure;
FIG. 2 is a flow chart showing a second example method according to an example embodiment of the present disclosure;
FIG. 3 is a flow chart describing an example implementation of a method of the present disclosure, using apparatus mounted on a vehicle;
FIG. 4 is a schematic diagram showing an implementation of method and apparatus according to an embodiment of the present disclosure, wherein the apparatus is mounted on a platform;
FIG. 5 is a schematic diagram showing connections between a control unit and other components that form part of the apparatus shown in FIG. 4; and
FIG. 6 is a schematic diagram showing connections between the detectors and the processor that form part of the apparatus showing in FIG.4.

### DETAILED DESCRIPTION

The first aspect of the present disclosure provides a method of characterising an incoming electromagnetic energy beam. The method comprises the steps of generating a beam of laser pulses, generating a beam of plasma filaments from the laser pulses, directing the plasma filaments so that they intersect with the incoming electromagnetic energy beam thereby generating a diffuse electromagnetic energy beam, and detecting a first portion of the diffuse electromagnetic energy beam using a first detector.

It is known in the prior art that a laser pulse having sufficiently high peak power can self-focus, through the Kerr effect. In most circumstances, a laser beam will diverge as it propagates, but self-focusing of laser pulses can cancel or exceed the divergence, enabling the pulses to propagate without diverging, forming so-call laser filaments. At a critical pulse power, a self-focused pulse can cause the air through which it is propagating to ionise, forming a plasma. The plasma in turn affects the pulse, which can become trapped within the plasma. Inhomogeneities in the phase of the wavefront of the pulses typically result in each pulse forming an array of plasma filaments across its transverse profile. Generation of such filaments is a technique known in the prior art. As used herein, a "filament" is an elongate region of ionised air (i.e. a plasma) formed by laser pulse.

The laser pulses will have a wavelength at which they will ionise the air, for example700nm to 900 nm, for example 800nm.

The plasma filaments are elongate regions of ionised air, i.e. plasma. Self-focusing of the laser pulses within the plasma by the Kerr effect can produce long filaments, as the pulses propagate at high peak powers within the filaments. The filaments may for example be > 2cm long, > 25cm long, > 50cm long, > 1m long, > 4m long or even > 10m long. However, shorter filaments may be useful as having higher peak powers, for example, the filaments may be < 1m long, for example < 50cm, < 25cm or even < 5cm. The beam of filaments may have a width of less than 100 microns.

Directing the beam of plasma filaments so that it intersects with the incoming energy beam may include the step of steering the beam of pulses, for example by steering a gimballed mount.

Directing the beam of filaments so that it intersects with the incoming energy beam may include the step of receiving a radar or electro-optic signal indicating the potential source of the incoming beam and directing the beam of pulses towards that potential source.

Thus, the beam of the laser pulses may be generated before the incoming energy beam is detected.

Directing the beam of plasma filaments so that intersects with the incoming energy beam may include the step of sensing that the incoming energy beam is incident on a target.

A beam of plasma filaments that is directed so that it intersects an incoming electromagnetic energy beam will alter the optical properties of the air through which the incoming beam passes. The alteration of the optical properties of the air will disrupt the incoming beam. Interaction of the incoming energy beam with the plasma filaments in that way results in the energy of the incoming electromagnetic beam being spread over a wider range of propagation angles. The incoming electromagnetic energy beam will therefore be detectable by one or more detectors. Rather than being concentrated in a small spot on a target, the incoming electromagnetic energy beam is thereby spread into a larger, more diffuse pattern, with the energy of the beam spread over wider area. Hereafter the incoming electromagnetic energy beam may be referred to as a diffuse electromagnetic energy beam, or diffuse energy beam, after it has interacted with the beam of filaments. The diffuse energy beam may have a lower transverse peak power of the incoming beam.

The incoming electromagnetic energy beam may be focused energy beam. The incoming electromagnetic energy beam may be a laser beam. The incoming energy beam may be from an active sensor. The incoming energy beam may be from a communication device. The incoming electromagnetic energy beam may be an infrared electromagnetic energy beam.

It is desirable that the intersection of the beam of filaments with the incoming energy beam is as close to the source of the incoming beam as possible, to maximise the spreading of energy from the incoming beam. For example, the intersection may be at least 50m, at least 100m, at least 500m or at least 1km away from the location where the beam of laser pulses is generated.

The method comprises detecting a first portion of the diffuse energy beam using a first detector.

The diffuse energy beam will span a range of propagation angles that is greater than the range of propagation angles spanned by the incoming beam prior to interaction with the beam of plasma filaments. The first detector may detect a first portion of the diffuse electromagnetic energy beam that spans a subset of the range of propagations angles spanned by the diffuse energy beam.

The first detector may be an area detector. The first detector may be configured to detect between 0.1% and 100% of the total area of the diffuse beam.

Alternatively, the first detector may be a point detector.

The first detector may be configured to detect the diffuse energy beam over a fixed time period. The time period may be between 0.1 milliseconds and 10 seconds.

The first detector may be a CCD detector, a photodiode detector, a CMOS detector, or a thermal detector. The first detector may be a wavelength detector, a frequency detector, a pulse length or pulse frequency detector or an intensity detector.

The method may comprise measuring a first characteristic of the first portion of the diffuse energy beam.

The first characteristic may be measured using the first detector. The first characteristic may be a wavelength or frequency of the first portion of the diffuse energy beam. The first portion may include a range of wavelengths and frequencies. The first characteristic may be the average wavelength or frequency of the first portion. The first detector may be configured to detect a range of wavelengths and frequencies. The first detector may be configured to detect a range of wavelengths between 10 nm and 10 mm. The first detector may measure the spread or range of wavelengths of the first portion of the energy beam.

The first characteristic may be an energy of the first portion of the diffuse energy beam. The first detector may be configured to detect a range of energies. The first potion of the diffuse energy beam may include a range of energies. The detector may measure the average energy of the first portion of the diffuse energy beam. The first detector may measure the spread or range or energies of the first portion of the electromagnetic energy beam.

The first characteristic may be a power of the first portion of the diffuse energy beam. The first detector may be configured to detect a range of powers.

The first characteristic may be an intensity of the first portion of the diffuse energy beam. The intensity of the first portion of the electromagnetic energy beam may show spatial variation in a direction transverse to the direction of propagation of the beam. The first detector may measure spatial variation in the intensity of the first portion of the beam. The first detector and/or measurement apparatus may measure the average intensity of the first portion of the diffuse electromagnetic energy beam. The first detector may measure the variation in intensity of the first portion of the diffuse energy beam over a period of time.

The diffuse energy beam may be a pulsed beam, and the first characteristic may be a pulse frequency of the first portion of the diffuse electromagnetic energy beam. The first characteristic may be a pulse length for the first portion of the electromagnetic energy beam. The first detector may detect or measure the average pulse length or pulse frequency for the first portion of the diffuse energy beam.

The method may comprise recording data related to the first characteristic. The method may comprise displaying data related to the first characteristic using a display means. The method may comprise transmitting data relating to the first characteristic to a processor.

The method may comprise measuring a second characteristic associated with the first portion of the diffuse electromagnetic energy beam. The second characteristic may be measured using the first detector, or using a second, different detector. The second characteristic may be a different characteristic to the first characteristic. The second characteristic may be a wavelength, frequency, pulse length, intensity, or energy of the first portion of the electromagnetic energy beam. For example, the first characteristic may be a wavelength of the first portion of the diffuse electromagnetic energy beam, and the second characteristic may be an intensity of the first portion of the diffuse electromagnetic energy beam. The first characteristic may be measured using a wavelength detector, and the second characteristic may be measured using an intensity detector.

The method may comprise recording data relating to both the first characteristic and the second characteristic. The method may comprise transmitting data relating to the first characteristic and the second characteristic to a processor and/or a display means. The method may comprise using data relating to the first characteristic and the second characteristic and using the combined data to determine a property of incident electromagnetic energy beam. The propriety may be a size, shape, or beam profile of the incoming energy beam. The property may be an incoming direction of the beam. The property might be information relating to the source or origin of the beam. For example, the method may comprise measuring a wavelength of the first portion of the diffuse energy beam and an intensity of the first portion of the diffuse energy beam, and using this information to determine, the source and/or location of the incident energy beam.

The method may comprise measuring a plurality of different characteristics of the first portion of the diffuse entry beam. Each of the plurality of different characteristics may be measured using a different detector. The method may comprise recording and/or storing data associated with the plurality of different characteristics. The method may comprise transmitting data associated with the plurality of different characteristics to a processor and/or a display means. The method may comprise combining data associated with the plurality of different characteristics of the first portion of the diffuse energy beam and using the data to determine a property or properties of the incident energy beam. The characteristics may be used to determine, the source origin, incoming direction, size, or beam shape/profile of the incident energy beam.

The method may comprise detecting a second portion of the diffuse energy beam. The second portion of the diffuse energy beam may be measured using a second, different detector. Alternatively, the second portion of the diffuse energy beam may be measured using the first detector, for example, if the first detector is moveable or configured to detect the beam over different time periods. The second portion of the diffuse energy beam may be a different spatial area of the diffuse beam, spanning a different range of propagation angles. The second portion may be detected using a second detector located at a different position to the first detector. The second portion may be detected using the first detector, by moving the first detector to a second location. Alternatively, the first portion of the diffuse energy beam may be measured over a first time period, and the second portion of the diffuse electromagnetic energy beam may be a portion measured over a second, different time period. In this case, the second portion may be measured using the first detector.

The method may comprise measuring a first characteristic of the second portion of the diffuse energy beam. The first characteristic of the second portion may be the same first characteristic that was measured for the first portion. The first characteristic may be a wavelength, frequency, pulse length, pulse frequency intensity, or energy. The first characteristic of the second portion may, alternatively, be a different characteristic to the first characteristic measured for the first portion. The measured characteristic for the second portion may differ in value to the measured characteristic for the first portion, for example, second portion may include a different range of wavelengths, frequencies, energies or intensities to the first portion.

The second detector may be the same type of detector as the first detector. The second detector may be a different type of detector to the first detector. The second detector may be a CCD detector, a photodiode detector, a CMOS detector, or a thermal detector. The first detector may be a wavelength detector, a frequency detector, a pulse length or pulse frequency detector or an intensity detector. The first detector and second detector may be the same type of detector and may be positioned at different spatial locations. For example, the first and second detectors may both be intensity detectors, and may be positioned to measure different ranges of propagation angles for the first and second portions of the diffuse energy beam.

The method may comprise measuring a second characteristic associated with the second portion of the diffuse energy beam. The second characteristic measured for the second portion may be a different characteristic to the first characteristic measured for the first portion. The second characteristic may be a wavelength, frequency, pulse length, intensity, or energy of the first portion of the electromagnetic energy beam.

The method may comprise detecting a plurality of different portions of the diffuse electromagnetic energy beam. The plurality of different portions may be measured using a plurality of different detectors. For example, the plurality of different portions may span different areas of the diffuse energy beam, or may span different propagation angles. A plurality of different detectors may be positioned at different locations to detect the different portion of the beam. Alternatively, the plurality of different portions may be measured using the same detector, for example, if the detector is movable or configured to detect the beam over different time periods. The method may comprise measuring a first characteristic of the first portion of the diffuse electromagnetic energy beam using a first detector, and measuring the same characteristics for a plurality of different portions of the electromagnetic energy beam.

The method may comprise using data related to a characteristic of the first portion of the diffuse energy beam and data related to a characteristic of the second portion of the diffuse electromagnetic energy beam to determine a property of the incident electromagnetic energy beam. The method may comprise recording data relating to a characteristic of the first portion and data relating to a characteristic of the second portion. The method may comprise transmitting data relating to the first and second portions a processor and/or a display means. The method may comprise processing data associated with the first portion of the beam and data associated with the second portion of the beam and combining the processed data to determine a property of the beam. For example, the method may comprise measuring an intensity of a first area of the beam, and measuring an intensity of a second, different area of the beam, and using the first and second intensities to determine a beam shape and/or size and/or direction of the incident energy beam.

According to a second aspect, the present disclosure comprises an apparatus for characterising an incoming energy beam. The apparatus comprises filament generation apparatus, comprising a laser arranged to generate a beam of laser pulses. The filament generation apparatus comprises beam manipulation optics, arranged to manipulate the beam of laser pulses into a beam of plasma filaments. The apparatus comprises a steerable mount. The apparatus comprises a sensor for detecting the incoming energy beam. The apparatus comprises a first detector, for detecting a first portion of an electromagnetic energy beam. The apparatus comprises a control unit. At least a part of the filament generation apparatus is mounted on the mount. The sensor is arranging to send a detection signal to the control unit on detection of the incoming energy beam. The control unit is configured to transmit a steering signal to the mount in response to the detection signal to steer the mount so that it directs the beam of filaments to intersect the incoming energy beam, thereby generating a diffuse energy beam. The apparatus comprises a first detector that is configured to detect a first portion of the diffuse energy beam.

The filament generation apparatus may include a waveguide, for example an optical fibre, for example connecting the laser to the beam manipulation optics.

The filament generation apparatus may include beam-steering optics. The beam-steering optics may be mounted on the mount.

The laser may be a sold-state laser, for example a Ti:sapphire laser. The laser may be a gas laser, for example a CO2 laser.

The beam manipulation optics may include a beam expander and/or beam contractor. The beam manipulation optics may include a diverging lens or a converging lens to cause the beam of pulses to diverge or converge.

(As used herein, "lens" can mean either of a transmissive or a reflective lens, i.e. a curved mirror)

The sensor may be or include a monopulse sensor. The sensor may be or include a quadrant sensor.

The sensor may be or include a radar receiver or an electrooptic detector. The radar receiver or electrooptic detector may be on the same platform as the filament generation apparatus, or it may be separate from it. The radar receiver or electrooptic detector may be configured to track the source of the incoming energy beam.

The sensor may include a wavelength detector, utilising for example a band pass filter or spectrum analyser, to detect the wavelength or wavelengths of the incoming energy beam. Identification of the incoming energy beam may enable identification of what part of the target is being targeted, for example a particular sensor.

The steerable mount may be a gimballed mount.

The control unit may be a microprocessor or may be implemented in field-programmable gate array (FPGAs), for example.

The first detector may be arranged such that a first portion of the diffuse energy beam falls incident on the first detector. The first detector may be an area detector. The first detector may be a point detector. The first detector may be a CCD detector, a photodiode detector, a CMOS detector, or a thermal/IR detector. The first detector may be a wavelength detector, a frequency detector, a pulse length or pulse frequency detector or an intensity detector. The first detector may be in a fixed position. Alternatively, the first detector may be movable to detect different portions of the diffuse energy beam. The first detector may be positioned proximate to the sensor, and/or proximate to the filament generation apparatus. The first detector may be positioned on the steerable mount.

The apparatus may comprise a second detector configured to detect a second portion of the diffuse energy beam. The second detector may be spatially separated from the first detector. The first detector may be configured to measure a first area of the diffuse energy beam, and the second detector may be configured to measure a second, different area of the diffuse energy beam. The second detector may be the same type of detector as the first detector and the first and second detectors may be used to measure the same characteristic of two different portions of the beam. Alternatively, the second detector may be a different type of detector to the first detector. The first detector may be used to measure a first characteristic of a first portion of the beam, and the second detector may be used to measure a different characteristic of the firs portion of the beam, or of a second portion of the beam.

The apparatus may comprise a plurality of detectors. The detectors may be positioned at different locations and may be configured to detect different portions of the diffuse energy beam. The detectors may be the same type of detector. The detectors may be different types of detectors, for measuring different characteristics of the diffuse beam.

The apparatus may comprise a processor for processing data from the first detector and from any additional detectors. The apparatus may comprise a display means for displaying data from the first detector and any additional detectors.

According to a third aspect, the present disclosure provides a platform including an apparatus having any of the features set out above. The platform may be ground based. The platform may be mounted on a vehicle. The platform may be mounted on a ship or an aircraft. The platform may be mounted on a building. The first detector and any additional detectors may be fixed in position on the platform, or may be moveable relative to the platform.

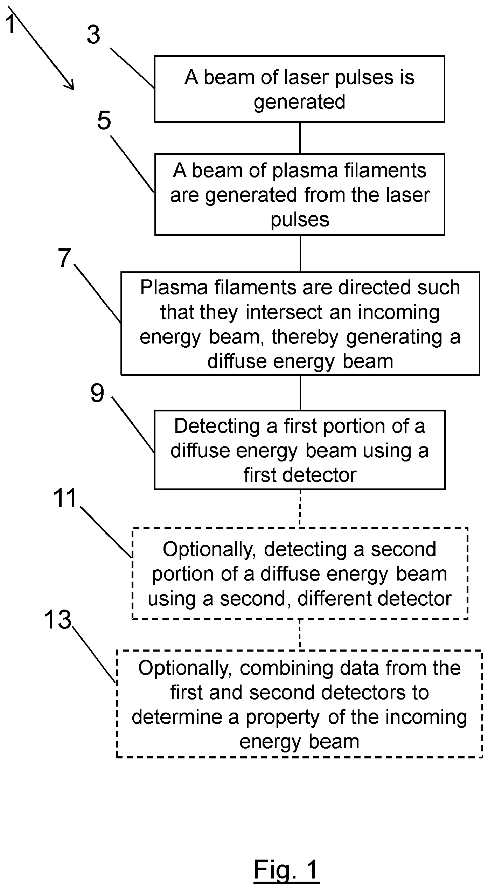

FIG.1 is a flowchart showing an example method 1 according to an embodiment of the present disclosure. In a first step, 3, a beam of laser pulses is generated, and in a second step, 5, a beam of plasma filaments is generated from the laser pulses. In a third step, 7, the beam of plasma filaments is directed such that they intersect an incoming energy beam. The beam is directed in response to signal received from a sensor, indicating that a beam source has been detected. The beam is directed by steering the beam towards that source. When the beam of filaments intersects the incoming energy beam, the energy of the incoming beam is dispersed over a wider range of propagation angles, thereby generating a diffuse energy beam. In a fourth step, 9, the method comprises detecting a first portion of the diffuse energy beam using a detector. Optionally, in step 11, the method may comprise detecting a second portion of the diffuse energy beam using a second, different detector. Optionally, in step 13, data from the first detector and data from the second detector may be combined and used to determine a property of the incoming energy beam.

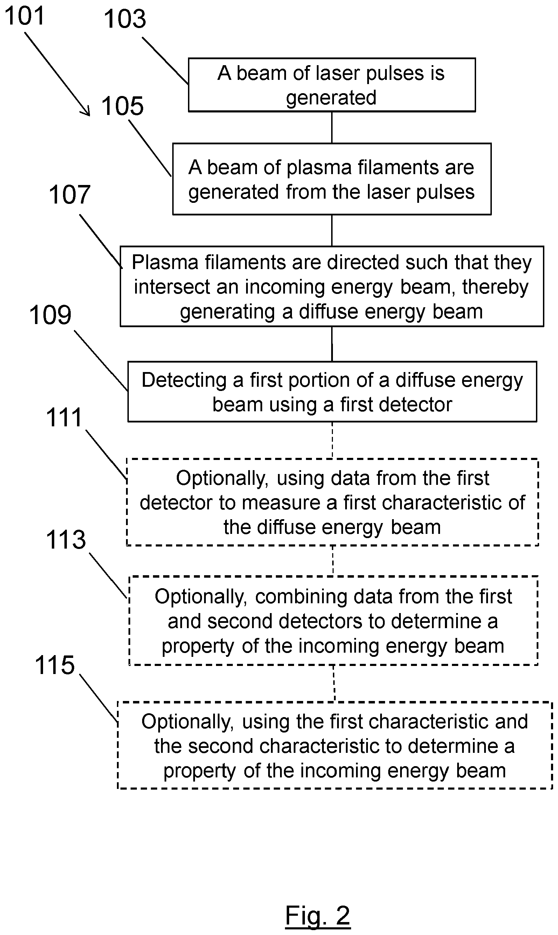

FIG. 2 is a flowchart showing an example method 1 according to an embodiment of the present disclosure. In a first step, 103, a beam of laser pulses is generated, and in a second step, 105, a beam of plasma filament is generated from the laser pulses. In a third step, 107, the plasma filaments are directed such that they intersect an incoming energy beam. Directing the beam of filaments requires receiving a signal indicating the potential source of the beam, and steering the beam towards that source. When the beam of filaments intersects the incoming energy beam, the energy of the incoming beam will be spread over a wider range of propagation angles, thereby generating a diffuse energy beam. In a fourth step, 109, the method comprises detecting a first portion of the diffuse energy beam using a first detector., Optionally, in the fifth step, 111, data from the first detector may be used to measure a first characteristic of the first portion of the diffuse energy beam. Optionally, in a sixth step 113, data from the first detector may be used to measure a second, different characteristic of the first portion of the diffuse energy beam the method may comprise detecting a second characteristic of the first portion of the diffuse energy beam. Optionally, in step, 115, the first characteristic and the second characteristic may be used to determine a property of the incoming energy beam.

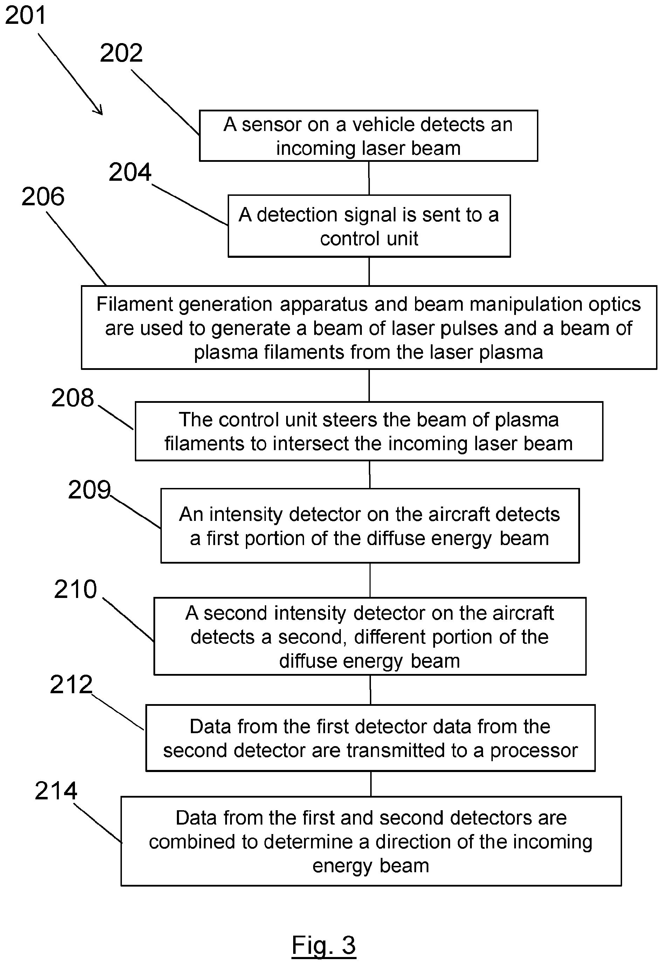

FIG. 3 is a flowchart describing an example implementation of a method, 201, according to an embodiment of the present disclosure. In a first step, 202, a sensor on a vechile detects an incoming laser beam. In second step, 204, a detection signal is sent to a control unit. In a third step, 206, filament generation apparatus and beam manipulation optics are used to generate a beam of laser pulses and a beam of plasma filaments from the laser pulses. In a forth step, 208, the control unit steers the beam of plasma filaments to intersect the incoming laser beam. The beam of plasma filaments causes filaments causes divergence of the incoming laser beam, such that the beam is spread over a wider range of propagation angles. In a firth step, 209, a first intensity detector detects the intensity of a first portion of the diffuse energy beam. In a sixth step 210, a second intensity detector positioned spatially separated from the first detector, detects the intensity of a second, different position of the diffuse energy beam. In a seventh step, 212, data from the first detector and the second detector are transmitted to a processor. In an eighth step, 214, data from the first detector and the second detector are combined to determine a direction of in the incoming energy beam.

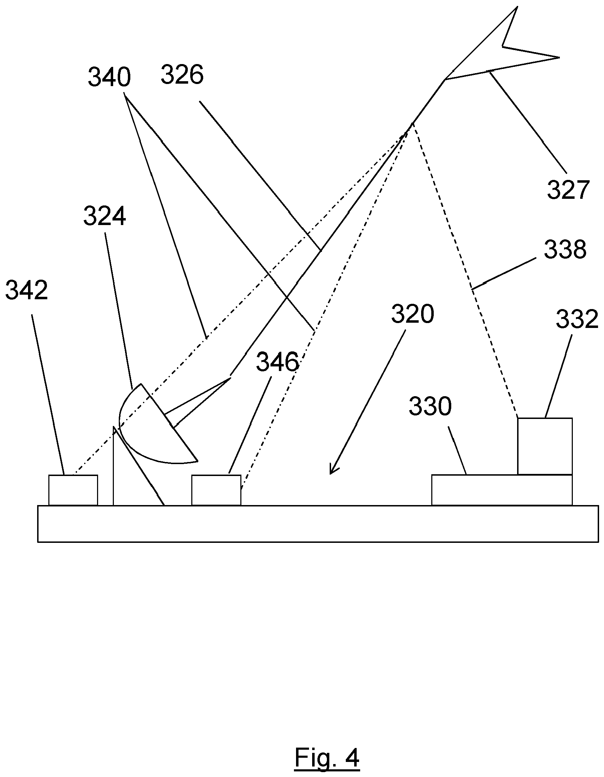

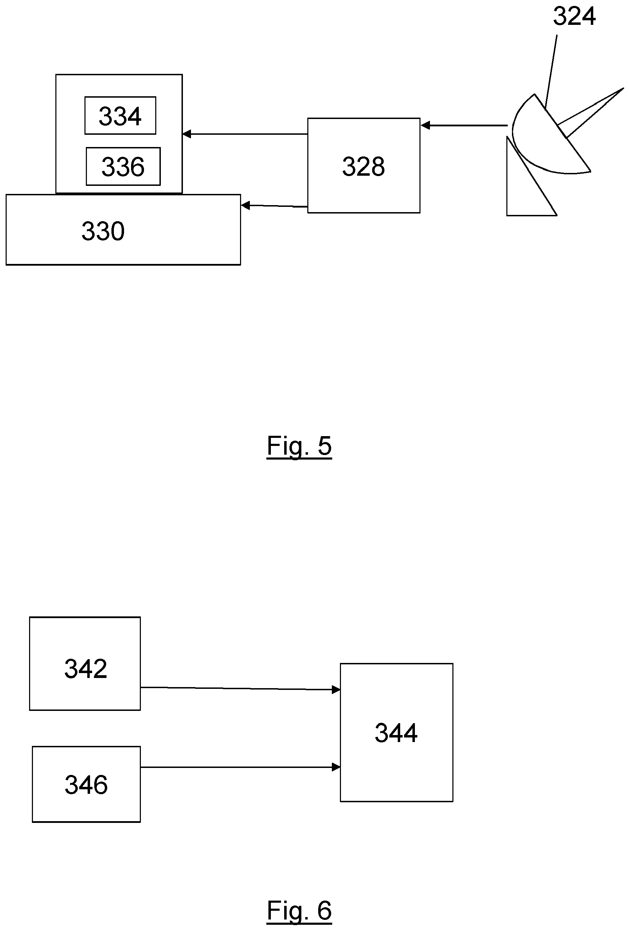

FIGS. 4, 5 and 6 are schematic diagrams showing an example implementation of a method and apparatus according to an embodiment of the present disclosure. FIG. 4 shows a platform 320, on which apparatus according to an embodiment of the present disclosure may be mounted. FIGS. 5 and 6 are schematic diagrams showing connections between the components of the apparatus. As shown in FIG. 4, the platform 320 includes a sensor 324 for detecting including laser beams. In response to the sensor 324 detecting an incoming laser beam 326 from a laser source 327, the sensor 324 transmits a detection signal to a control unit 328 (shown in FIG. 5, not shown in FIG.4). The platform 320 also includes a steerable mount 330 connected to the control unit 328. As shown in FIG.5, filament generation apparatus 332 comprising a pulsed laser source 334 and beam manipulation optics 336 is mounted on the mount 330. When the control unit 328 receives a detection signal from the sensor 324, the control unit 328 directs the filament generation apparatus to generation apparatus to generate a beam of filaments 338 using the pulsed laser source 334 and the beam manipulation optics 336. The control unit 328 directs the steerable mount 330 to direct to the beam of filaments 338 towards the incoming laser beam 326. As shown in FIG.4, when the beam of filaments 338 intersects the incoming laser beam 326 the incoming laser beam 326 will diverge, such that the energy of the laser beam will be spread over a wider range of propagation angles, generating a diffuse energy beam 340. A first intensity detector 342 mounted on the platform 320 detects a first portion of the diffuse energy beam 340. As shown in FIG. 6, data relating to the first portion of the diffuse energy beam is transmitted to a data processor 344 and a first characteristic, in this case, an intensity of the first portion of the diffuse energy beam 340 is measured and recorded. A second intensity detector 346 mounted on the platform 320 detects a second portion of the diffuse energy beam 340. Data relating to the second portion of the diffuse energy beam is transmitted to a data processor, and the intensity of the second portion of the beam 340 is measured and recorded. The intensities of the first and second portions of the diffuse beam 340 are used to determine the direction of the incoming energy beam 326.

In embodiments of the present disclosure, the platform shown in Fig. 4 is mounted on a vehicle, for example, on an aircraft or on a ship. In other embodiments of the present disclosure, the platform is ground based or mounted on a building.

Whilst the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention may not be desirable, and may therefore be absent in other embodiments.

## Claims

1. A method of characterising an incoming electromagnetic energy beam, the method comprising the steps of:
generating a beam of laser pulses;
generating a beam of plasma filaments from the laser pulses;
directing the plasma filaments so that they intersect with the incoming electromagnetic energy beam, thereby generating a diffuse electromagnetic energy beam; and
detecting a first portion of the diffuse electromagnetic energy beam using a first detector.

2. A method according to claim 1, further comprising measuring a first characteristic of the first portion of the diffuse electromagnetic energy beam.

3. A method according to claim 2 wherein the first characteristic is a wavelength, frequency, pulse length, pulse frequency, intensity, or energy, of the first portion of the diffuse electromagnetic energy beam.

4. A method according to claim 2 or claim 3, further comprising measuring a second characteristic associated with the first portion of the diffuse electromagnetic energy beam.

5. A method according to claim 4 or claim 5, comprising using data related to the first characteristic and data related to the second characteristics to determine a property of the incident electromagnetic energy beam.

6. A method according to any preceding claim, further comprising detecting a second portion of the diffuse electromagnetic energy beam.

7. A method according to claim 6, further comprising measuring a first characteristic of the second portion of the diffuse electromagnetic energy beam.

8. The method according to claim 7 wherein the first characteristic of the second portion is characteristic is a wavelength, frequency, pulse length, intensity, or energy of the second portion of the electromagnetic energy beam.

9. A method according to any of the claims 2-8, comprising measuring a first characteristic of the first portion of the diffuse electromagnetic energy beam and measuring the same characteristic for a plurality of different portions of the electromagnetic energy beam.

10. A method according to any of the claims 7 to 9 further comprising using data related to a characteristic of the first portion of the diffuse electromagnetic energy beam and data related to a characteristic of the second portion of the diffuse electromagnetic energy beam to determine a property of the diffuse electromagnetic energy beam.

11. A method according to claim 10, comprising using intensity data for a first portion of the diffuse energy beam and intensity data for a second portion of the diffuse energy beam, and combining this data to determine a size and/or shape and/or direction of the incident electromagnetic energy beam.

12. An apparatus for characterising an incoming energy beam, the apparatus comprising:
filament generation apparatus, comprising a laser arranged to generated a beam of laser pulses and beam manipulation optics arranged to manipulate the beam of laser pulses to generate a beam of plasma filaments;
a steerable mount;
a sensor for detecting the incoming energy beam;
a control unit, wherein at least part of the filament generation apparatus is mounted on the mount, and wherein the sensor is arranged to send a detection signal to the control unit on detection of the incoming energy beam and the control unit is configured to transmit a steering signal to the mount, in response to the detection signal, to steer the mount so that it directs the beam of filaments to intersect the incoming energy beam, thereby generating a diffuse energy beam; and
a first detector for detecting a first portion of a diffuse electromagnetic energy beam and wherein the first detector is configured to detect a first portion of the diffuse energy beam.

13. Apparatus according to claim 12 wherein the first detector is a CCD detector, a photodiode detector, a CMOS detector, or a thermal detector, a wavelength detector, a frequency detector, a pulse length or pulse frequency detector or an intensity detector.

14. Apparatus according to claim 12 or claim 13, further comprising a second detector configured to detect different portion of the diffuse energy beam.

15. Apparatus according to any of claim 12-14, comprising a plurality of detectors configured to detect different portions of the diffuse energy beam.
